# EUROPEAN PATENT APPLICATION

(11) **EP 3 002 726 A1**
(43) Date of publication of application: **06.04.2016**
(21) Application number: 15000572.6
(22) Date of filing: 27.02.2015
(51) Int. Cl.: G06Q 50/14, G06Q 10/06

(54) **Automated task handling**

(30) Priority: 01.10.2014 US 201414503720
(71) Applicant: Amadeus S.A.S., 06410 Biot (FR)
(72) Inventor: Canis, Laure, 06300 Nice (FR); Angelini, Christophe, 06130 Grasse (FR); Mantelet, Pascale, 06600 Antibes (FR); Petrella, Axelle, 06600 Antibes (FR); Dumaine, Julien, 06200 Nice (FR)
(74) Representative: Samson & Partner Patentanwälte mbB

(57) **Abstract**

Methods, systems, and computer program products for automated task handling. A task handling module receives data defining a plurality of tasks relating to resolution of a revenue accounting issue. For each task, the module determines to which of a plurality of inboxes arranged in a hierarchical electronic filing system the task should be dispatched. This determination may be based on matching a user or team profile to data in a task template associated with the task. The module may determine an urgency for each task, and select the order in which tasks are resolved based the urgency. The module may select resolved tasks for validation based on an expected impact of validating the task, and to maintain a broad sample of validated tasks. Historical data relating to resolution and validation of tasks may be stored in a database to provide key performance indicators and to determine validation selection parameters.

## Description

### BACKGROUND

The invention generally relates to computers and computer software, and in particular to methods, systems, and computer program products for managing revenue accounting tasks related to the sale and use of travel products.

In the travel industry, airline tickets may be sold through an indirect seller, such as a travel agency. The indirect seller will typically check for available flights that satisfy a traveler's travel plans and, once matching flights are found, book flights for the traveler and collect payment. Payment may be collected by the indirect seller or validating carrier. The operating carrier may then be compensated for the cost of the service out of the received payment.

At times, the carrier may detect a revenue accounting issue with a ticket. Accounting issues may include an improperly priced ticket, a proration or tax calculation issue, an unmatched usage of the ticket, a discrepancy between departure control and e-ticket server usage data, an accounting rules default, or any other issue indicative of a mispriced or improperly used ticket. In response to determining there is a revenue accounting issue, the carrier may attempt to remedy the issue by completing one or more tasks.

Because the number of transactions that occur daily in the airline industry is large, revenue accounting systems typically require a large number of tasks be performed by system operators each day Such tasks may include determining when a ticket has an error, determining how the error may be corrected, investigating and reconciling discrepancies between data in the Electronic Ticketing System of the validating carrier and the Departure Control System of the operating carrier, and issuing documents to resolve any errors found. Carriers may employ a large number of operators to handle these revenue accounting tasks because resolving each task often requires a significant amount of manual intervention, including generation, validation, and issuance of corrective documents. Hence, carriers typically spend significant resources on management of tasks and workflow relating to revenue accounting.

Thus, improved systems, methods, and computer program products are needed that assist in handling tasks associated with revenue accounting processes, including assignment of tasks to system users, evaluation of proposed resolutions to tasks, and monitoring workflow.

### SUMMARY

In an embodiment of the invention, a method of managing a plurality of tasks using a plurality of team inboxes is provided. The method includes, for each task of the plurality of tasks, determining a type of the task, determining one or more team inboxes having a team profile that matches the type of the task, and adding the task to one of the one or more team inboxes having the matching team profile. The method further includes, for each user of a plurality of users, authorizing access to one or more of the plurality of team inboxes, and denying access to each team inbox the user has not been authorized to access, wherein each team inbox defines a virtual team of users having access to tasks in the team inbox.

In another embodiment of the invention, a system for managing the plurality of tasks is provided. The system includes a processor and a memory storing instructions that, when executed by the processor, cause the system to, for each task of the plurality of tasks, determine the type of the task, determine the one or more team inboxes having the team profile that matches the type of the task, and add the task to one of the one or more team inboxes having the matching team profile. The instructions further cause the system to, for each user of the plurality of users, authorize access to the one or more of the plurality of team inboxes, and deny access to each team inbox the user has not been authorized to access, wherein each team inbox defines the virtual team of users having access to tasks in the team inbox.

In another embodiment of the invention, a computer program product is provided that includes a non-transitory computer-readable storage medium including instructions. The instructions may be configured, when executed by the processor, to cause the processor to, for each task of the plurality of tasks, determine the type of the task, determine the one or more team inboxes having the team profile that matches the type of the task, and add the task to one of the one or more team inboxes having the matching team profile. The instructions may further cause the processor to, for each user of the plurality of users, authorize access to the one or more of the plurality of team inboxes, and deny access to each team inbox the user has not been authorized to access, wherein each team inbox defines the virtual team of users having access to tasks in the team inbox.

### BRIEF DESCRIPTION OF THE DRAWINGS

The accompanying drawings, which are incorporated in and constitute a part of this specification, illustrate various embodiments of the invention and, together with the general description of the invention given above, and the detailed description of the embodiments given below, serve to explain the embodiments of the invention.
FIG. 1 is a diagrammatic view of an exemplary operating environment including a plurality of computer systems in communication via a network.
FIG. 2 is a diagrammatic view of an exemplary computer system of FIG. 1.
FIG. 3 is a diagrammatic view of a block diagram depicting a task handling module, a task resolution database, and a revenue accounting module that may be hosted by one or more of the computer systems in FIG. 1.
FIG. 4 is a diagrammatic view depicting a plurality of system users each having an inbox organized in a hierarchical structure of inboxes that defines a virtual team of users supported by the task handling module of FIG. 3.
FIG. 5 is a diagrammatic view depicting a task being assigned to members of the virtual team of FIG. 4.
FIG. 6 is a diagrammatic view of a user interface generated by the task handling module displaying a team inbox.
FIG. 7 is a diagrammatic view of the user interface in FIG. 6 displaying a user inbox.
FIG. 8 is a diagrammatic view of a hierarchical inbox configuration including the user inbox for an operator, and monitoring inboxes for a validator, a supervisor, and a manager.
FIG. 9 is a diagrammatic view of the user interface of FIG. 6 displaying the monitoring inbox.
FIG. 10 is a diagrammatic view of the user interface of FIG. 6 displaying a validation window.
FIG. 11 is a diagrammatic view of the validation window of FIG. 10 displaying a task history.
FIG. 12 is a diagrammatic view of the user interface of FIG. 6 displaying a backlog KPI window.
FIG. 13 is a diagrammatic view of the user interface of FIG. 6 displaying a deadlines KPI window.
FIG. 14 is a diagrammatic view of the user interface of FIG. 6 displaying a time spent KPI window.
FIG. 15 is a diagrammatic view of the user interface of FIG. 6 displaying a daily activity KPI window.
FIG. 16 is a diagrammatic view of the user interface of FIG. 6 displaying a validation KPI window.
FIG. 17 is a flow chart depicting a process for validating a resolved task that may be executed by the task handling module of FIG. 3.

### DETAILED DESCRIPTION

Embodiments of the invention may be implemented by a computer system, such as a revenue accounting system of a carrier, which may be in communication with a Global Distribution System (GDS). The revenue accounting system and GDS may provide processing and database functions that facilitate interconnections between indirect sellers of airline tickets and a plurality of computer reservation systems each associated with a travel product provider. In the context of air travel, the computer system may be configured to allow travelers to book airline tickets and other travel products through indirect sales channels. These indirect sales channels may include online travel agencies or other business entities selling tickets for services to be provided by a carrier. The indirect sellers may receive payment from the travelers for the booked tickets and compensate the carrier for the cost of the service provided out of the received payment, or by having the travelers make a direct payment to the carrier.

The computer system may provide a task handling module that enables carriers to manage tasks generated by a revenue accounting system. These tasks may relate to problems detected with the sale or use of a ticket or other transaction, such as incorrect pricing by the indirect seller. The task handling module may provide an integrated management system for automatically handling tasks using a hierarchical arrangement of inboxes for receiving, assigning, and validating tasks. This hierarchical arrangement of inboxes may include virtual teams of users.

To facilitate automatic assignment of tasks, each task may be associated with a task template. The task template may include parameters and business data. The parameters may define the task type, and may be used by the task handling module to route the task to a team inbox. The business data may include other data that is attached to a task, such as data identifying a key-value to be evaluated for the task (e.g. an underlying memo amount or board point). The task template may also define parameters that are to be evaluated in determining whether to trigger a validation cycle, and parameters that are to be used to set a task priority or severity level.

Users within the team who want to begin work on a new task may request the task handling module assign the next task. The task handling module may then automatically determine the next task that the user should receive based on an urgency of the task and a user profile of the user. The urgency may depend at least in part on a deadline associated with the task, with the urgency increasing as tasks approach their deadlines. The task handling module may thereby optimize assignment of tasks based on both the urgency of the task and the skills and experience of the user to whom the task is being assigned.

The task handing module may facilitate workflow management by tracking the history of the tasks from generation to closure, and by maintaining an audit trail for the task and each user working to resolve the task. To this end, the task handling module may store and retrieve task-related data in a task resolution database. The task resolution database may store historical data relating to the resolution of tasks, as well as data for use in generating Key Performance Indicators (KPIs) that track the number of tasks received, closed, and validated on a per team, per user, and per task type basis. The task handling module may further use the historical data to determine which resolved tasks to select for validation based on a model that optimizes the impact of available validation resources. The task handling module may thereby facilitate management of workflow, revenue, and evaluation of the users processing the tasks.

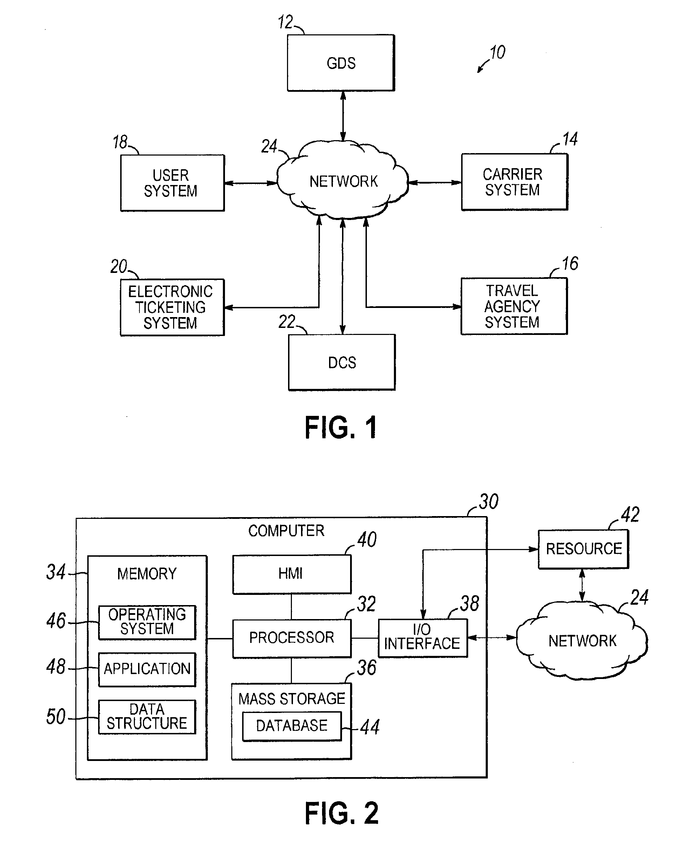

Referring now to FIG. 1, an operating environment 10 in accordance with an embodiment of the invention may include a GDS 12, a travel product provider system, or carrier system 14, an indirect seller system, or travel agency system 16, a user system 18, an Electronic Ticketing System (ETS) 18, and a Departure Control System (DCS) 19. Each of the GDS 12, carrier system 14, travel agency system 16, user system 18, ETS 20, and DCS 22 may represent one of a plurality of systems, and may communicate through a network 24, which may include one or more private or public networks (e.g., the Internet) that enable the exchange of data.

The GDS 12 may be configured to facilitate communication between the carrier system 14 and travel agency system 16 by enabling travel agents, validating carriers, or other indirect sellers to book reservations on the carrier system 14 via the GDS 12. To this end, the GDS 12 may maintain links to a plurality of carrier systems via the network 24. These links may allow the GDS 12 to route reservation requests from the carrier system 14 of the validating carrier or travel agency system 16 to the corresponding carrier system 14 for the operating carrier. The carrier and travel agency systems 14, 16 may thereby book flights on multiple carriers via a single connection to the GDS 12.

The carrier system 14 may include a Computer Reservation System (CRS) that enables the GDS 12 or travel agency system 16 to reserve and pay for airline tickets. The carrier system 14 may also interact with other carrier systems, either directly or through the GDS 12, to enable a validating carrier to sell tickets for seats provided by the operating carrier. The operating carrier may then bill the validating carrier for the services provided. Billing between business entities acting as indirect sellers and business entities acting as travel service providers may be provided by a Billing Service Provider (BSP) system (not shown). In some embodiments of the invention, the ETS 20 and DCS 22 for a particular carrier may be provided by the corresponding carrier system 14 of the carrier.

The user system 18 may be in communication with one or more of the GDS 12 and the carrier system 14 via the network 24 or some other suitable connection. The user system 18 may thereby provide users with a terminal or other suitable interface to the GDS 12 and/or the carrier system 14. Users may thereby communicate with the GDS 12 and carrier system 14 via the user system 18 to resolve or otherwise manage tasks.

The ETS 20 may comprise a computer system configured to maintain records of the booking and use of tickets, such as electronic tickets, issued by a corresponding carrier. The ETS 20 may track the status of tickets issued by the carrier using data stored by the ETS 20. This data may be stored, at least in part, in the form of a Passenger Name Record (PNR) comprising one or more reservation records that define one or more reservations booked by the passenger. The PNR may also track usage of the purchased travel services. The PNR may be identified by a record locator unique to that PNR, and may include records defining an itinerary for a particular trip, service, passenger, or group of passengers. The itinerary may include services from multiple carriers (e.g., flights, bus, and or rail segments), hotel reservations, rental car reservations, or any other travel-related services.

The DCS 22 may provide automated processing of tickets as the travel products booked by the tickets are used. This processing may include printing boarding passes and other coupons that are redeemed when receiving booked travel services. The DCS 22 may also track checked baggage, ticket use by the traveler, and airport check-in and boarding. To perform these services, the DCS 22 may operate cooperatively with the ETS 20 and various computing devices including, but not limited to check-in kiosks, check-in web-sites, and mobile devices of the travelers. The DCS 22 may update the PNR to indicate the status of each travel product identified by the electronic ticket as the travel product is used, such as in response to the traveler checking-in at an airport or boarding an aircraft.

Referring now to FIG. 2, the GDS 12, carrier system 14, travel agency system 16, user system 18, ETS 20, and DCS 22 of operating environment 10 may be implemented on one or more computer devices or systems, such as exemplary computer system 30. The computer system 30 may include a processor 32, a memory 34, a mass storage memory device 36, an input/output (I/O) interface 38, and a Human Machine Interface (HMI) 40. The computer system 30 may also be operatively coupled to one or more external resources 42 via the network 24 and/or I/O interface 38.

The processor 32 may include one or more devices selected from microprocessors, micro-controllers, digital signal processors, microcomputers, central processing units, field programmable gate arrays, programmable logic devices, state machines, logic circuits, analog circuits, digital circuits, or any other devices that manipulate signals (analog or digital) based on operational instructions that are stored in the memory 34. Memory 34 may include a single memory device or a plurality of memory devices including but not limited to read-only memory (ROM), random access memory (RAM), volatile memory, non-volatile memory, static random access memory (SRAM), dynamic random access memory (DRAM), flash memory, cache memory, or any other device capable of storing information. The mass storage memory device 36 may include data storage devices such as a hard drive, optical drive, tape drive, non-volatile solid state device, or any other device capable of storing information.

Processor 32 may operate under the control of an operating system 46 that resides in memory 34. The operating system 46 may manage computer resources so that computer program code embodied as one or more computer software applications, such as application 48 residing in memory 34, may have instructions executed by the processor 32. In an alternative embodiment, the processor 32 may execute the application 48 directly, in which case the operating system 46 may be omitted. One or more data structures 50 may also reside in memory 34, and may be used by the processor 32, operating system 46, or application 48 to store or manipulate data.

The I/O interface 38 may provide a machine interface that operatively couples the processor 32 to other devices and systems, such as the network 24 or external resource 42. The application 48 may thereby work cooperatively with the network 24 or external resource 42 by communicating via the I/O interface 38 to provide the various features, functions, and modules comprising embodiments of the invention. The application 48 may also have program code that is executed by one or more external resources 42, or otherwise rely on functions or signals provided by other system or network components external to the computer system 30. Indeed, given the nearly endless hardware and software configurations possible, persons having ordinary skill in the art will understand that embodiments of the invention may include applications that are located externally to the computer system 30, distributed among multiple computers or other external resources 42, or provided by computing resources (hardware and software) that are provided as a service over the network 24, such as a cloud computing service.

The HMI 40 may be operatively coupled to the processor 32 of computer system 30 in a known manner to allow a user to interact directly with the computer system 30. The HMI 40 may include video or alphanumeric displays, a touch screen, a speaker, or any other suitable audio and visual indicators capable of providing information to the user. The HMI 40 may also include input devices and controls such as an alphanumeric keyboard, a pointing device, keypads, pushbuttons, control knobs, microphones, etc., capable of accepting commands or input from the user and transmitting the entered input to the processor 32.

A database 44 may reside on the mass storage memory device 36, and may be used to collect and organize data used by the various systems and modules described herein. The database 44 may include data and supporting data structures that store and organize the data. In particular, the database 44 may be arranged with any database organization or structure including, but not limited to, a relational database, a hierarchical database, a network database, or combinations thereof. A database management system in the form of a computer software application executing as instructions on the processor 32 may be used to access the information or data stored in database records in response to a query, where a query may be dynamically determined and executed by the operating system 46, application 48, or one or more modules.

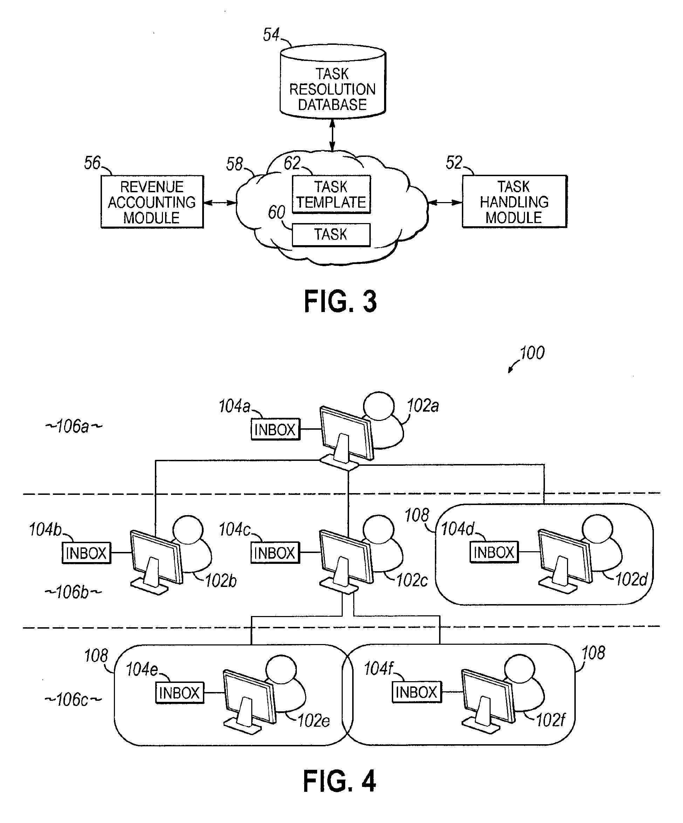

Referring now to FIG. 3, the task handling module 52 may be in communication with the task resolution database 54 and a revenue accounting module 56 through a medium 58, such as a communication network or a shared memory space. The task handling module 52, task resolution database 54, and revenue accounting module 56 may be hosted by the GDS 12, carrier system 14, or any other suitable computer system. The task handling module 52 may provide functions for managing tasks relating to transactions involving tickets sold by the indirect sellers. The task resolution database 54 may store data relating to the tasks managed by the task handling module 52, and may be accessed by the task handling module 52 to retrieve and store task-related data. The revenue accounting module 56 may be part of the revenue accounting system of a carrier, and may receive ticket or other transaction-related data from one or more sources, such as the GDS 12, the carrier system 14, the travel agency system 16, ETS 20, DCS 22, and/or billing platforms such as the BSP.

The revenue accounting module 56 may generate a task 60 related to the issuance, use, and billing of tickets, such as in response to an audit detecting a problem with a ticket. In the case of indirect sales auditing, the revenue accounting module 56 may compare the actual fare charged by the indirect seller to a fare that should have been charged for the ticket. For outward interline billing audits, the revenue accounting module 56 may compare an amount received from the validating carrier to an amount that should have been received. For inward interline billing audits, an amount billed by the operating carrier may be compared to a prorated amount to which the operating carrier is entitled. In any case, a discrepancy relative to the audit amount may generate the task 60. The task 60 may comprise, for example, instructions to generate an Agency Debit Memo (ADM). In the case of a billing dispute between the operating and validating carriers, the task 60 may comprise instructions to generate an interline bill to the validating carrier (i.e., interline outward billing) or issue a rejection memo to the operating carrier (i.e., interline inward billing). Other tasks that may be generated in response to detecting a discrepancy may include instructions to dispute a received ADM, or issue an inquiry into a received dispute.

Tasks may also be raised outside the revenue auditing process. Additional automated processes may raise tasks to perform some other validation or various actions not necessarily linked to a revenue audit. Some of these automatically raised tasks may require the user to check and validate (i.e., audit) the automated action performed or suggested by the system. Others may be triggers that prompt the user to perform a specific action, such as allocating additional contract numbers from a stock database in response to the current stock of contract numbers dropping below a certain level, inserting a new BSP calendar in response to the approach of the end of year, or any other action relating to the operation of a travel service provider.

In response to an accounting event, such as receipt of an ADM, a billing dispute, or detection of a discrepancy between the ETS 20 and DCS 22, the revenue accounting module 56 may generate the task 60 and forward the task 60 to the task handling module 52 for processing. This determination may depend on the specific use case for the ticket, or "task type". The task type may be stored in a task template 62 that is associated with the task 60. The task template 62 may be configured so that the carrier can add additional parameters into the task template 62, such as a business unit to which the task 60 should be assigned. The business unit may comprise a team profile that defines a virtual team of users having access to the task. The task template 62 may also be used to store additional data used by the task handling module 52 to manage the task 60, such as assigning the task 60 to a particular user.

In response to generating the task 60, the revenue accounting module 56 may determine a root cause of an accounting issue that triggered generation of the task 60. The revenue accounting module 56 may then determine if any additional accounting issues are created by the root cause of task 60. If additional tasks would normally be generated in response to these additional accounting issues, the revenue accounting module 56 may add the additional accounting issues associated with the root cause to the existing task 60. Thus, rather than creating additional tasks, the revenue accounting module 56 may consolidate multiple accounting issues relating to a single root cause into the existing task 60. The revenue accounting module 56 may thereby avoid generating multiple tasks relating to a single root cause. Additional business data generated by the revenue accounting application that would have generated the additional tasks may also be stored in the task template 62 of task 60. The business data may include data identifying each of the affected tickets, such as a pointer, so that each of the affected tickets can be fixed once the root cause addressed.

An example of a root cause that may result in tasks being consolidated is a missing prorate factor. In the case of a missing prorate factor, the uniqueness of the consolidated task may be based on matching origination and destination points for the underlying flight. In any case, once the consolidated task is processed by the user, all related issues associated with the root cause may be solved automatically. The consolidation of related tasks may thereby lead to further increases in user productivity, less confusion due to a lower number of tasks in user inboxes, and eliminate the need to open and process individual tasks or for the user to remember how they processed the previous task.

The task handling module 52 may assign each task 60 received to the team corresponding to the business unit identified in the corresponding task template 62. Each business unit may thereby define a functional domain of the tasks that a member of the corresponding team is authorized to work on. To facilitate controlling authorization on a per-user basis, each user may be associated with a user profile that defines at least one characteristic of the user. For example, the user profile may define one or more business units to which the user belongs, a security requirement the user satisfies, such as a maximum value of a task the user can view or work on, or any other suitable characteristic of the user.

Based on one or more characteristics of the user stored in the user profile, the user may be authorized to access tasks assigned to the one or more business units and/or team profiles defined in the user profile. Access to tasks may be based on a security model that ensures security of revenue accounting data. The security module may control which tasks a specific user can access based at least in part on their business unit and role within the organization. This may enable creation of "virtual teams" by assigning each user comprising the virtual team to a business unit. Assigning a user to a specific business unit may allow the user to access any task having a template including the specific business unit as a parameter. The user's ability to access a task assigned to the business unit may be further based on the user role within the business unit. That is, the type of actions the user can perform on tasks assigned to the business unit may further depend on whether the user is an operator, validator, or supervisor.

Each task may be assigned to a team or user by storing the task in an inbox corresponding to the team or user. Each inbox may comprise a virtual container configured to hold a set of tasks within an electronic filing system. Types of inboxes may include user inboxes that hold tasks assigned to a specific user, and team inboxes that hold tasks assigned to a team. Users may include operators that focus on resolving tasks, validators that focus on controlling the quality of resolved tasks and authorizing tasks involving cash flows, and supervisors that focus on monitoring workload, supporting operators, and dispatching tasks if manual intervention is needed. While only certain users, such as a supervisor or validator, may be able to recall tasks from a user inbox, team inboxes may be configured so that tasks can be retrieved by any user having the authority to access the task.

An operator having access to an inbox may view or work on tasks in the inbox to which they have access rights. That is, in addition to having access rights to the inbox, the user may be required to have specific access rights to a task in the inbox in order to view or modify the task. Task access rights may be determined by matching a security parameter in the task template 62 with a corresponding parameter in the user profile of the user.

Inboxes may be accessed through a user interface provided by the task handling module 52. Each operator may be selectively assigned access to one or more specific inboxes, such as their user and team inbox. The task handling module 52 may manage who has access to each task based on the inboxes to which each operator has access, the security parameters in the task template 62, and the user characteristics in the user profile. Operators may be assigned different access levels, with each access level providing different access rights to the corresponding inbox. Exemplary inbox and task access levels may include "view-only" access, which may allow the user to view tasks, but prevent the user from editing or otherwise modifying the task. Another level of access may be "modify" access, which may allow the user to edit, move, solve, or otherwise modify the tasks in the inbox. The task handling module 52 may thereby manage task workflow by adding tasks to inboxes providing appropriate access levels to appropriate users.

Referring now to FIG. 4, a role based access control model 100 may define access levels for each of a plurality of users 102a-102f based on the business unit and organizational role assigned to the user. Each of the users 102a-102f may have access to one or more inboxes 104a-104f. In the exemplary embodiment depicted, the role based access control model 100 may include a plurality of organizational roles 106a-106c to which the users 102a-102f may be assigned, with each organizational role 106a-106c defining a user type authorized to have a certain level of access. The task handling module 52 may ensure security of revenue accounting data by only allowing access to tasks by authorized users. The organizational role 106a-106c of the user may correspond to a hierarchical level of the user within an organization. Exemplary roles may include operator (e.g., a user that works on task resolution), validator (e.g., a user that monitors and controls the quality of resolutions generated by the operators in the validator's business unit, and authorizes resolution of tasks involving cash flows), supervisor (e.g., a user in charge of monitoring workload, supporting operators, and recalling and dispatching tasks within the business unit, if needed), manager (e.g., a "super-user" authorized to recall and dispatch tasks belonging to the same business unit, including tasks assigned at a supervisor level), or any other suitable role within the organization.

Users 102a-102f may be further organized into virtual teams based on the business units to which the users 102a-102f are assigned, such as exemplary virtual team 108. The virtual team 108 may have an uncorrelated hierarchical structure, and may be defined by assigning the users 102d, 102e, 102f of virtual team 108 to a role in the same business unit. For example, by adding the business unit defining the virtual team 108 to the user profile of users 102d, 102e, and 102f. The business unit of the user 102a-102f may determine a functional domain of the tasks that the user 102a-102f can work on. Exemplary business units may include interline, travel agency, BSP, or any other business unit definition suitable for segregating tasks.

By way of example, a user assigned the role of operator for a sales auditing team may be assigned the role of validator for an interline auditing team. The user's access level for each team inbox may be set according to their role within the team. The task handling module 52 may thereby enable access controls to be assigned to users so that users have access to the right team and user inboxes. Creating virtual teams by assigning specific business unit access control to each of the inboxes for users that are to be part of the virtual team may enable carriers to avoid electronic filing system updates following an organizational change. The virtual team feature may thereby provide an agile way to organize users and to efficiently manage user workload. By handling tasks through team inboxes and user inboxes, carriers may ensure correct assignment between generated tasks and users in charge of handling the tasks.

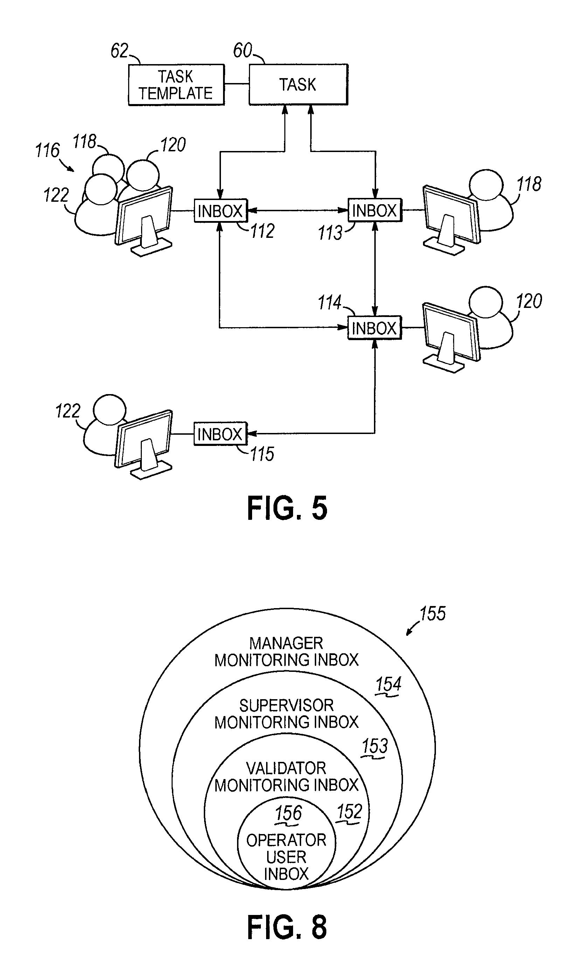

Referring now to FIG. 5, the task handling module 52 may be configured to automatically dispatch the task 60 to one of a plurality of inboxes 112-115 belonging to a business unit, such as the inbox 112 of a team 116, or the user inbox 113 of an operator 118. This assignment may be in accordance with data stored in the task template 62 defining the type of task and the business unit to which the task 60 is assigned. In either case, the inbox 112-115 may be selected by the task handling module 52 based on the type of task or other parameters in the task template 62. The user inbox 113 of operator 118 may be configured so that the operator 118 can dispatch the task 60 back to the inbox 112 of team 116, or to the user inbox 114 of a supervisor 120. The task handling module 52 may thereby enable the operator 118 to receive support if the operator 118 needs help resolving the task 60.

In most cases, task assignment workflow may be managed automatically by the system. That is, the task may be assigned automatically to the operator in response to the task being created. If validation is required, the task may be assigned to the validator in response to the operator solving the task. The task may then be automatically closed in response to the solved task being validated by the validator, or upon a determination that the solved task does not require validation. In cases were user intervention is require, the system may provide users with tools to move tasks within the system.

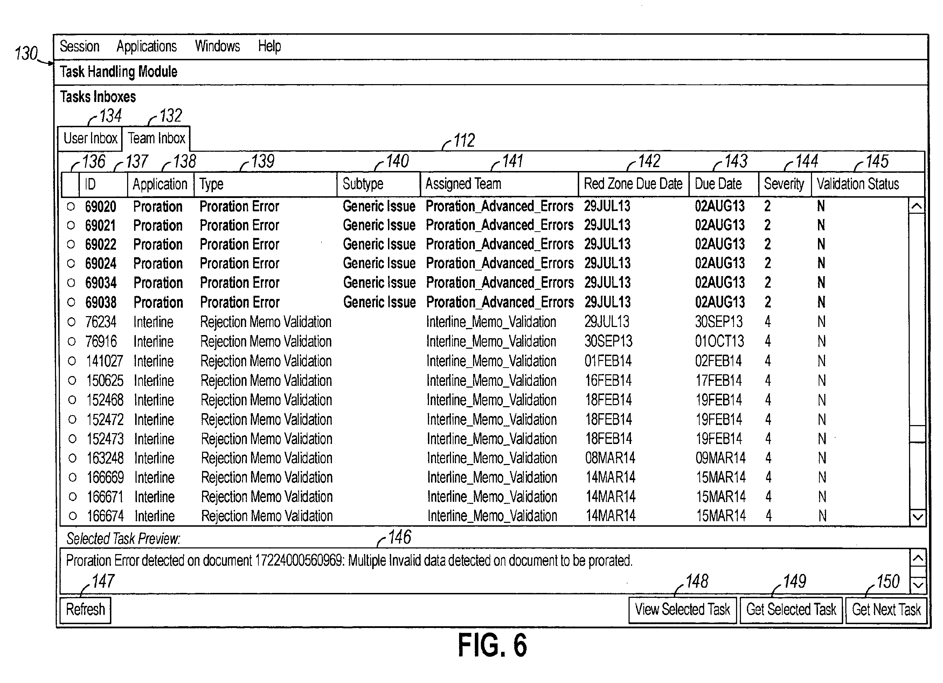

To this end, the user inbox 114 of supervisor 120 may be configured so that the supervisor 120 can recall the task 60 from the inbox 112 of team 116 or the user inbox 113 of operator 118, as the case may be. The ability of the supervisor to recall tasks from user inboxes may be provided by a supervisor monitoring inbox 153 (FIG. 6). The supervisor monitoring inbox 153 may enable the supervisor to see all tasks assigned to operator inboxes of same business unit, as described in more detail below.

The supervisor 120 may dispatch the task 60 to the user inbox 115 of another operator 122. The supervisor 120 may also dispatch the task 60 directly from the team inbox 112 of team 116 or the user inbox 113 of operator 118 to the user inbox 115 of operator 122. The supervisor 120 may thereby adjust workloads between operators 118, 122, or reassign the task to the operator 122, who may be better suited to process the task 60. The dispatch feature may thereby provide a way for supervisors to manually control a task through a specific workflow up to resolution of the task. In embodiments of the invention, users may block their user inbox, or user inboxes of lower level users within their business unit, so that tasks will not be assigned to a user who is out of the office or otherwise unable to receive tasks.

Each inbox 112-115 may be linked to the revenue accounting system of the carrier, or otherwise configured so that the tasks in the inbox 112-115 are displayed by the user interface of any related revenue accounting applications used by the user. For example, if the operator 118 opens the task 60 using the task handling module 52, the user interface of the revenue accounting application required to resolve the task 60 may be embedded in, or displayed through, the task handling module 52. This may be accomplished, for example, by the task handling module 52 providing a user interface that opens a window for displaying the user interface of the revenue accounting application. In this way, the revenue accounting application may be accessed through the task handling module 52. In any case, once the task 60 has been closed (e.g., resolved, validated, and the corrective action taken), the task 60 may be automatically removed from the inboxes 112-115. In cases were tasks require additional action (e.g., validation or corrective action), the removed task may be forwarded to the appropriate user inbox as determined by the automatic workflow logic.

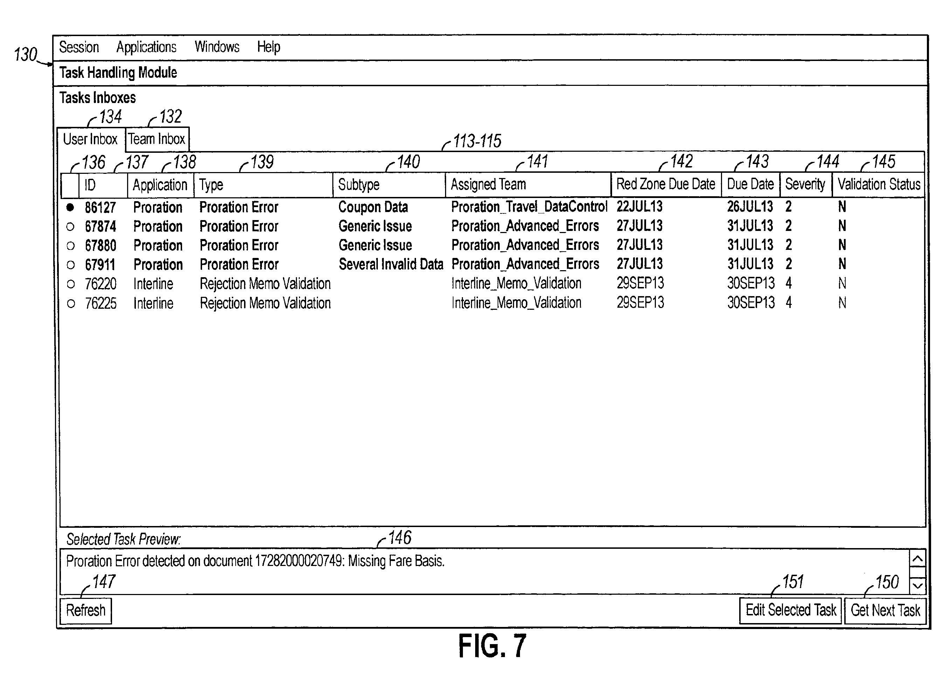

Referring now to FIGS. 6 and 7, an exemplary user interface 130 that may be provided by the task handling module 52 includes a team inbox window 132 and a user inbox window 134. The user may cause the task handling module 52 to display the contents of the team inbox 112 or their user inbox 113-115 by activating the corresponding window 132, 134. Each of the team inbox window 132 and user inbox window 134 may comprise a plurality of columns 136-145 that display data relating to the tasks in the corresponding inbox 112-115. Exemplary columns may include selected task 136, task identity 137, task application 138, task type 139, task sub-type 140, team assigned to process the task 141, target date 142 (e.g., "Red Zone Due Date"), due date 143, task severity 144, and validation status 145 of the task. The user interface may also include a selected task preview window 146 that displays a brief description of the selected task.

The target date 142 may be defined as a date prior to the due date 143 by which the user should have at least started processing the task. The target date 142 may thereby provide a warning to the user that they should be working on the task so that the task is finished prior to the due date 143. The task handling module 52 may be configured so that each carrier can define the parameters used to determine the target date 142, the due date 143, and the task severity 144. Dates may also be determined dynamically by the application creating the task. For example, the target date 142 may be defined as the creation date of the task + x days. More complex formulae may be used depending on the task and defined parameters. For example, tasks with a higher relative urgency may be assigned to users before tasks having a lower relative urgency.

As depicted in FIG. 6, when displaying the team inbox window 132, the user interface 130 may further display a refresh button 147 that updates the displayed inbox, a view selected task button 148 that opens the selected task for viewing, a get selected task button 149 that retrieves the selected task from the team inbox 112 and places the task in the user inbox 113-115, and a get next task button 150 that selects the next task in the displayed inbox based on an urgency of the task. As discussed in more detail below, in response to the task being placed in the user inbox 113-115, a timer may be started to track the time spent by the user on the task for use in determining a KPI. As depicted in FIG. 7, when displaying the user inbox window 134, the user interface 130 may display the refresh button 147, the get next task button 150, and an edit selected task button 151 that opens the selected task for editing.

Referring now to FIG. 8, based on the role of the user, the task handling module 52 may enable certain users to view or control tasks in the inboxes of other users through monitoring inboxes 152-154. Monitoring inboxes 152-154 may include all tasks in inboxes assigned to users having a lower hierarchical role within the business units to which the user of the monitoring inbox has access control. Monitoring inboxes 152-154 may thereby enable users within the same business unit 155 to view or control tasks assigned to other users in the business unit 155 having a lower role than the user having access to the monitoring inbox. In the exemplary embodiment depicted, the lowest role is that of the operator, followed in increasing order by validator, supervisor, and manager. Because there are no users in the business unit 155 having a role below operator, users at the operator level may not have access to a monitoring inbox.

Moving up a level, each validator may be provided with access to the validator monitoring inbox 152. The validator monitoring inbox 152 may provide access to the tasks in each operator user inbox 156 of the operators in the business unit 155. The access provided by the validator monitoring inbox 152 may allow the validator to view or control the tasks in the operator user inbox 156 of each operator in the business unit 155. In a similar manner, the supervisor monitoring inbox 153 may provide access to the tasks in the inboxes of each operator and validator in the business unit 155, and the manager monitoring inbox 154 may provide access to the tasks in each of the validator monitoring inbox 152, supervisor monitoring inbox 153, and operator user inbox 156 of business unit 155.

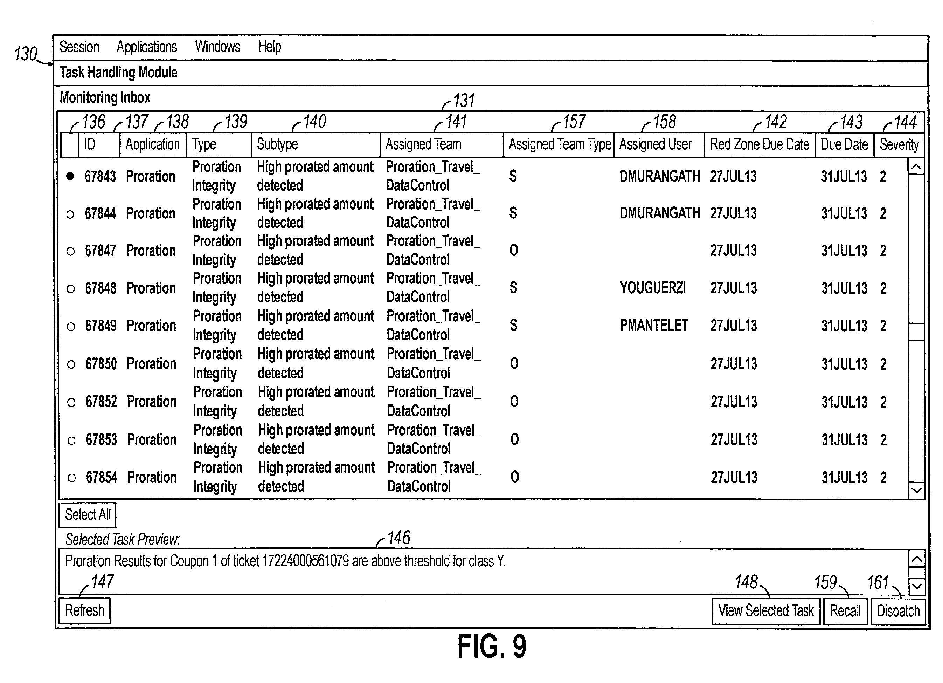

FIG. 9 depicts an exemplary presentation of the supervisor monitoring inbox 153 that may be displayed by the user interface 130 of task handling module 52. In addition to the selected task, task identity, task application, task type, task sub-type, assigned team, target due date, final due date, and task severity columns 136-144, the display of the supervisor monitoring inbox may further include an assigned team type column 157, and an assigned user column 158. When displaying the supervisor monitoring inbox 153, the user interface 130 may also display a recall button 159 and a dispatch button 161. The recall button 159 may be configured so that in response to the user activating the recall button 159, the task handling module 52 recalls the selected task from the inbox of the assigned user. The dispatch button 161 may be configured so that in response to the user activating the dispatch button 161, the task handling module 52 adds the selected task to the inbox of a selected user, or the team inbox of the same business unit.

The inbox structure and user interface 130 provided by the task handling module 52 may facilitate control of task processing activities by providing a full view of tasks within the business unit 155, e.g., pending tasks in the team inbox and ongoing tasks in user inboxes. The visibility provided by the task handling module 52 may alert users to task status and improve handling of tasks that need to be handled urgently, such as tasks that are close to their deadline or having a high severity rating. The hierarchical structure, virtual team feature, and ability of users above operator level to recall and dispatch tasks to and from inboxes of lower level users may provide a flexible tool for handling of tasks that adapts to changes in staffing.

In response to the user requesting the next task, such as by activating the get next task button 150, the task handling module 52 may select the next task in the inbox that should be processed by the requesting user. To this end, the task handling module 52 may determine the next most urgent task based on the relative severity of the task, the relative due date of the task, and/or the relative similarity of the task to one or more previous tasks processed by the user making the request. The selection preferences for determining the urgency of the task may be defined by the carrier. That is, the task handling module 52 may have different sets of parameters for determining which task is most urgent depending on the carrier that provided the travel product. By enabling the carrier to select the parameters, the task handling module 52 may enable the carrier to set rules that determine, at least in part, the order in which tasks are resolved. The task handling module 52 may avoid the need for users to choose which task to work on next, thereby avoiding subjectivity and associated loss of productivity. The automatic task selection feature may also ensure that tasks with the highest urgency (e.g., having the highest severity, soonest due date, or highest value to the carrier) are worked on before tasks having a lower urgency. The task handling module 52 may thereby facilitate consistent application carrier defined parameters regarding prioritization of tasks.

The task handling module 52 may also identify the next task to be processed by selecting tasks of the same type or having an expected resolution similar to a previous task processed by the user in question. By sequencing tasks of the same type with the same user, these similar tasks, which may be expected to have similar resolutions, may be handled one after the other. This may increase user productivity by allowing users to work on similar tasks in sequence while the steps required to resolve the previous task are still fresh in the mind of the user.

The task handling module 52 may dispatch new tasks to a specific team inbox based on the type of the task and a definition of the team. The task handling module 52 may further rely on business data extracted from the task template 62 to determine how to distribute tasks within a particular task type to the correct team or user inbox. To this end, task templates may include business data that further defines conditions for routing tasks to the correct inbox. For example, the business data may include a key-value, or task parameter, that is to be evaluated for each task in determining where to dispatch the task. An exemplary key-value may be the board point for a ticket underlying the task.

By way of example, all tasks of a certain type in which the board point = NCE may be dispatched to specific team or user inbox. To this end, the business data type (e.g., board point) may be defined by the carrier so that the carrier can control how tasks are assigned and which users have access to the tasks. The business data value (e.g., NCE) may determined by the application raising the task. The task template may thereby define how the task is directed based on the business data type and value. For example, if board point = NCE, the task template may cause the task to be assigned to team A, and if the board point ≠ NCE, the task template may cause the task to be assigned to team B or user C. Moreover, carriers may be able to change the business data used to assign tasks without involving the owner of the system providing the task handling module 52. Business data may comprise any suitable data associated with the task, such as boarding point, disembarkation point, memo amount, or reason for memo.

Based on the business data evaluation, the task handling module 52 may dynamically assign tasks by defining one or more teams comprising users that can accept the tasks based on the type of task. By way of example, the task handling module 52 may define two teams to handle tasks of the type in question. The task handling module 52 may then assign the task 60 to one or the other of the two teams based on the business data value. For example, all ADMs with an amount greater than a threshold may be dispatched to one of the two team inboxes, and all ADMs with an amount equal to or less than the threshold amount may be dispatched to the other of the two team inboxes.

In an alternative embodiment of the invention, the tasks may be assigned to a single team inbox having a team profile that matches the task type. However, only a portion of the users comprising the team may be able to view the task in the team inbox. This selective access may be achieved by including a security requirement, or key-value, in the task template of the tasks that are to only be viewed by the portion of the users having access rights to the tasks in question. The security requirement may be checked against a business value. For example, the user may be required to have an allowed maximum amount greater than the value of a memo in order to be assigned the memo, where the memo value is defined by the business data of the task. The portion of the users having the task access rights may then be defined by including the security requirement or key-value in the user profile of each user comprising the portion of the team users.

The task handling module 52 may further determine which inbox should receive the task 60 based on organizational role based access rights. These access rights may be based on security concerns about what access level should be required to view the task 60. Security requirements for the task 60 may be defined by the task template 62, which may allow security levels to be separately defined for each task. As an example of how access rights may be used to assign tasks, a set of tasks may be assigned to the same team based on the tasks satisfying the business data as described above. However, each user comprising the team may only receive the tasks satisfying a specific rule attached to user (e.g., the user inbox only receives tasks related to board points NCE and PAR, while the team inbox receives tasks for all board points). The task templates may thereby enable the task handling module 52 to select inboxes based on business rules and security requirements related to the type of task.

The business data may also be used as criteria in a search panel to locate the task 60. By assigning tasks to specified teams or users based on business data, task assignment may be optimized based on the skills of the user. Task templates may be used to ensure that users are only provided with access to the tasks on which they both are qualified and authorized to work. For example, tasks may only be dispatched to the inbox of the user if the task has an amount below a maximum amount the user is allowed to process and a board point that matches a user profile of the user. Thus, users may be provided access to the tasks that are relevant to their area of knowledge defined via business area, and can search tasks with finer granularity using search criteria based on the business data.

As an example of a dynamic assignment of a task based on data in the task template, presume that task 60 is raised in response to the carrier receiving an ADM. Depending on the business data selected by the carrier, a team may be selected to handle the task 60 based on the reason for memo code in the ADM. That is, the task template 62 may include data that causes the task 60 to be dispatched to different teams depending on the reason for memo code in the ADM. In any case, the ADM application provided by the revenue accounting system may store the reason for memo code of the ADM in the task template 62 for each task 60 raised in response to receiving an ADM associated with the task. That is, the ADM application may position the underlying ADM value within the created task as the value for the memo amount business data.

The task template 62 may also define an access right condition that determines which users may access the task 60. To this end, the task template 62 may be set up to include the following entries:

### Template Entry 1:

- Dynamic assignment:: EQUAL(BUSINESS_DATA(reason_for_memo), reason1)
- Business area:: ADMTEAM1

### Template Entry 2:

- Dynamic assignment:: IN(BUSINESS_DATA(reason_for_memo), [reason2, reason3])
- Business area:: ADMTEAM2

### Template Entry 3:

- Dynamic assignment:: NOT(IN(BUSINESS_DATA(reason_for_memo), [reason1, reason2, reason3])
- Business area:: ADMTEAM3

Using the above exemplary task template 62, if the task 60 is raised in response to receiving the ADM, the task 60 may be dispatched to the team inbox of ADM Team 1 if the reason for memo is "reason1". If the reason for memo is either "reason 2" or "reason 3", the task 60 may be routed to the team inbox of ADM Team 2, and if the reason is not "reason 1 ", "reason 2", or "reason 3", the task 60 may be dispatched to the team inbox of ADM Team 3. Under the above scenario, a user having access control to the business unit "ADMTEAM1" would only have access to the task 60 if the task 60 was raised in response to receiving an ADM with a reason code = reason 1.

As discussed above, the task template 62 may also be used to implement security requirements. By way of another example, task 60 may be raised in response to detection of a discrepancy between the ETS 20 and DCS 22 at the time the ticket is used. The business data for the carrier involved may require that the task 60 be handled by a team or user associated with the airport where the DCS detected the discrepancy, e.g., team = Charles de Gaulle Airport (CDG). For this exemplary case, the template entries may require that all tasks triggered in this way go to the same team (e.g., team CDG), but that each user comprising the team will only see the tasks they are entitled to see in compliance with security requirements. In the above case, business data defining an associated value may be entered in the task template 62 by the revenue accounting system application. This business data may define the board-point of the ticket causing the discrepancy between the ETS 20 and DCS 22 so that the task handling module 52 knows to only display the task 60 to users authorized to access the task 60.

An access right condition (e.g., required user access level) may be setup in the task template 62 as follows:

### Template Entry 4:

- Access Right:: EQUAL(USER_DATA(rev, manage_boardpoint, bpt), BUSINESS_DATA(boardpoint))
- Business Area:: AIRPORT

In the above case, a user having access control to the business unit "AIRPORT", assigned the role of operator, validator, or supervisor, and having a user profile that includes "Data Boardpoint: NCE for permission manage_boardpoint" may have access to tasks dispatched to the team inbox for AIRPORT having templates that include business data indicating the boardpoint = NCE. That is, a user with the following exemplary user profile entries would be granted access to the task:

### User profile Entry 1:

- Data:: business area=AIRPORT boardpoint=NCE for permission manage_boardpoint
- Role:: OPERATOR

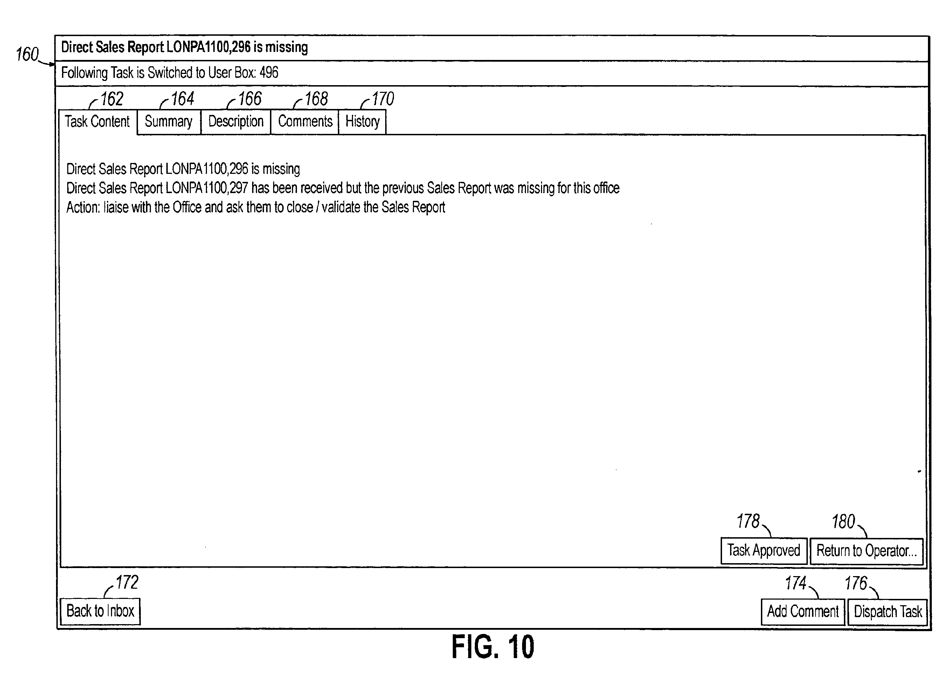

Referring now to FIG. 10, an exemplary validation window 160 that may be displayed by the user interface 130 of task handling module 52 may include a task content window 162, a summary window 164, a description window 166, a comments window 168, and a history window 170. The validation window 160 may also include a back to inbox button 172, an add comment button 174, and a dispatch task button 176. The task content window 162 may display a selected task to the validator so that the validator can determine if the task has been properly resolved. Based on this determination, the validator may either approve the task by activating a task approved button 178, or automatically return the task to the operator who originally solved the task by activating the return to operator button 180. The validator may also add a comment to the task by activating the add comment button 174, or dispatch the task to another inbox by activating the dispatch task button 176.

Validators may be responsible for validating tasks processed by operators. Validators may also replace an operator and solve a task, e.g., in response to an operator requesting assistance with the task. A task may also be raised for validation purposes, in which case the task may be dispatched directly to the inbox of the validator without first going to an operator. This may occur, for example, in response to the carrier receiving a document via an external file that the carrier wants validated, or a document created by an airline user via revenue accounting user interface. In any case, types of validation may include quality control and financial approval.

Quality control validation may involve the validator checking work done by an operator to resolve the task. Financial approval or authorization may be required for tasks that impact the cash-flow of the carrier, or that involve amounts above a threshold. That is, in some cases, the operator may be required to have a validator approve processing of the task. A specific user may not be allowed to both propose and validate a resolution for a task because doing so would violate a requirement that these duties be segregated. Segregation of processing and validation duties may improve the quality of the task handling process since the processing and validation steps are handled by different users.

The team inbox of the validator may contain tasks requiring validation with all information, including the reason for raising the task, a proposed resolution for the task, and comments from the operator. The validator may validate the task based on the proposed resolution, reject the task based on the proposed resolution, or resolve the task on behalf of the operator.

The validation cycle may be defined in the task template so that validation processes can be determined by the carrier. Validations may be performed based on a random sampling, business data, a security requirement, user characteristics, or combinations thereof. For example, the carrier may set a validation sample rate in the task template so that for a given type of task, validation is never performed (e.g., 0% of resolved tasks are validated), always performed (e.g., 100% of resolved tasks are validated), or performed on a sampling of resolved tasks (e.g. 20% of resolved tasks are validated). Business data may define one or more validation triggers, such as a validation trigger for a task involving a monetary amount above a certain value. For example, the business data may define a task parameter and a value of the task parameter for which the task must be validated. The business data may also define a user characteristic, such the user's role or an experience level of the user, which may further define a maximum monetary value of a task the user may solve without requiring validation. Business data may thereby define validation triggers that trigger validation cycles for tasks based on the type of parameter, the value of the parameter for the task, or a characteristic of the user solving the task. Security settings may trigger validation based on data in the user profile of the user who solved the task, such as how long the user has been in their role (e.g., role=operator_new). Validation may also be triggered based on a combination of the above parameters using logical operators defined in the task template.

By way of example, a carrier may determine that a type of task should be validated for quality control when the user that resolved the task is an operator with less than one year of experience in that role, and to sample 10% of resolved tasks. The carrier may further determine that financial approval should occur when the monetary amount of the task, as indicated by the business data, is greater than the maximum authorized amount for the user who resolved the task. These validation requirements may be implemented, by way of example only, by including the following entries in the task template:

### Template 5:

- Trigger Quality Control:: OR(USER_PERMISSION(rev, operator_new), PERCENTAGE(10))
- Trigger Financial Approval:: GREATER(BUSINESS_DATA(memo_amount ), USER_DATA(rev, max_amount, amount))

Now consider a user having the following user profile:

### User profile 2:

- Role:: operator_new
- Data:: amount: max_amount=1000
If a user having user profile 2 resolves the task associated with template 5, the task may be dispatched to the team inbox of a validator to receive a quality control validation based on the role of the user being "operator_new". If the task included a memo_amount > 1000, the task may also be dispatched to the team inbox of another validator to receive financial approval. This second validation may occur prior to or after the quality control validator has validated the proposed resolution.

The validator may validate or reject the proposed resolution of the task. If the validator validates the proposed resolution, the proposed resolution may be dispatched to the user inbox of the next validator (e.g., for financial approval) or be closed, depending on what validation triggers are set in the task template. If the proposed resolution is rejected, the task may be returned to the user inbox of the user that originally solved the task for further processing. The returned task may include comments from the validator that inform the user why the resolved task was rejected. The comments may be entered, for example, into the comments window 168 of the validation window 160. For cases in which the task has become stale, the validator may update the task prior to validating or rejecting the proposed resolution. While the task is being validated, the task handling module 52 may add a validation status indicator to the task template to inform users of the status of the task. Exemplary validation status indicators may include: resolved, validated quality control, rejected quality control, validated financial approval, rejected financial approval, validated at both levels.

Validation steps may be executed sequentially, and the task closed in response to all validation steps being completed. Upon closure of the task, processing of the resolution may begin, such as by issuing a memo or other document. By way of example, the revenue accounting system may detect an over-refund in response to receiving a Hand-Off Tape (HOT) file reporting IATA BSP agency-to-airline transactions. In response to detecting the over-refund, the revenue accounting system may raise a task, which may in turn be dispatched to the inbox of an operator by the task handling module 52. The operator may then open the task and determine whether to accept the refund, issue an ADM, or reject the refund. In the case where the operator issues the ADM, if the resolved task doesn't trigger a validation cycle, the ADM may be issued and the refund confirmed as soon as the operator resolves the task. If, on the other hand, the resolved task triggers a validation cycle, the ADM may not be issued and refund confirmed until the last validation cycle is completed successfully.

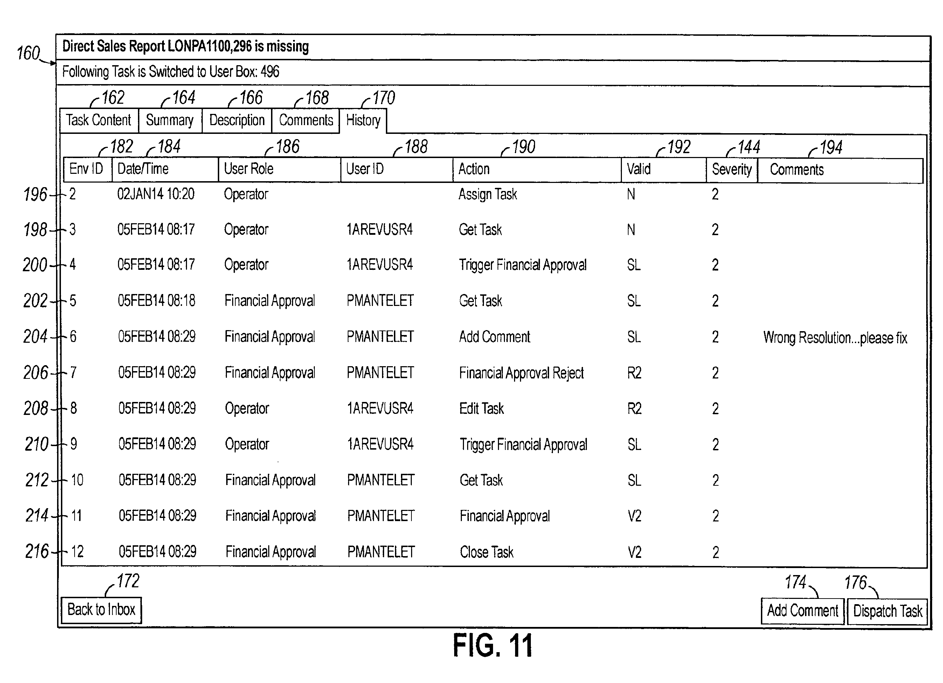

Referring now to FIG. 11, a screen view of the history window 170 of validation window 160 provides an exemplary work flow for a task requiring financial approval. History window 170 may include columns for the task severity 144, envelope identity 182, date and time 184, user role 186, user identity 188, action taken 190, validation 192, and comments 194. In row 196, the history window 170 shows that the exemplary task was received in the team inbox on January 2, 2014. Referring to row 198, operator 1AREVUSR4 received the task on February 5, 2014. The task may have been dispatched to the user inbox of operator 1AREVUSR4 in response to activation of the get next task button 150 of user interface 130. As shown by row 200, the operator subsequently resolved the task, which triggered a financial approval validation requirement. As shown by row 202, the task was subsequently dispatched to financial approval validator PMANTELET, who added a comment to the task (as indicated by row 204) and rejected the proposed resolution (as indicated by row 206). As indicated by row 208, the task was returned to operator 1AREVUSR4. As indicated by row 210, the operator resolved the task a second time, which again resulted in the task being dispatched to validator PMANTELET, as shown by row 212. As indicated by row 214, this time the proposed resolution to the task was validated by the validator. The resolution was then processed and the task closed, as indicated by the entry in row 216.

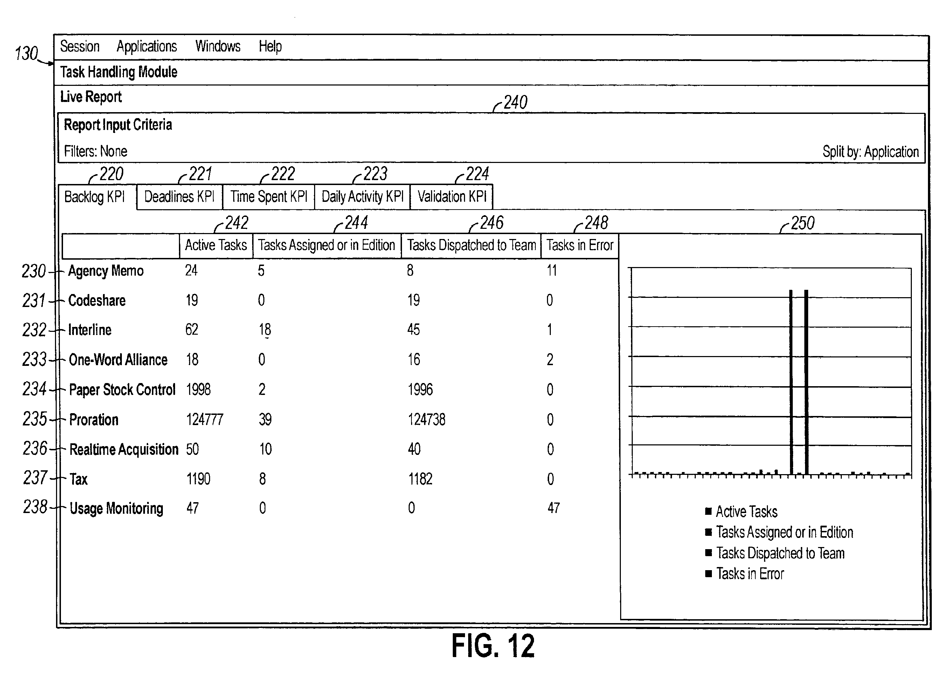

Referring now to FIGS. 12-16, the user interface 130 of task handling module 52 may further provide a plurality of windows that display KPIs, including a backlog KPI window 220, a deadlines KPI window 221, a time spent KPI window 222, a daily activity window 223, and validation KPI window 224. Each of the KPI windows 220-224 may display data arranged in a plurality of rows 230-238, with each row representing a business unit or team of users. The KPI windows 220-224 may also include a report input criteria data field 240 for entering criteria for filtering or otherwise narrowing the results displayed by the KPI windows 220-224.

The task handling module 52 may be configured to support analysis of closed tasks in user selectable periods. Statistics available may include aggregation per application, task type, or role. Statistics may be displayed on a per user or per-team bases to measure efficiency. KPIs may be stored using a suitable granularity, such as hourly or daily, so that historical trends can be determined. In an embodiment of the invention, the task handler may be configured to export KPI data in a standard file format, such as a comma-separated values (.csv) or other text file, so that the carrier may create customized reporting using the KPI data.

As shown in FIG. 12, the exemplary backlog KPI window 220 may display task information on a team-by-team basis that is related to determining workload. This data may include the number of tasks that are active 230, assigned or being actively worked 231, dispatched to a team 232, or in error 233. The backlog KPI window 220 may also include a graph 250 that displays the results in the form of a diagram, such as a bar graph (shown), line graph, scatter plot, or any other suitable graphical presentation.

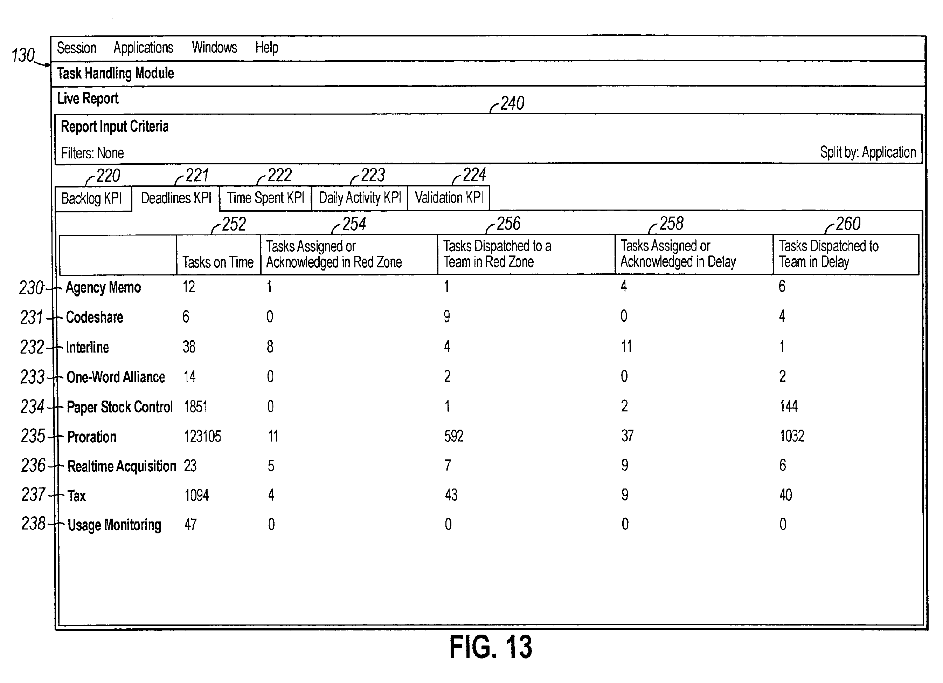

As shown in FIG. 13, the exemplary deadlines KPI window 221 may display task information for each team that is related to determining timeliness of closing out tasks. This data may include the number of tasks that are on time 252, tasks assigned or acknowledged that are in the red zone 254, tasks dispatched to a team that are in the red zone 256, tasks assigned or acknowledged that are in delay 258, or any other suitable statistic with regard to the status of tasks with respect to deadlines, such as tasks in backlog. Tasks may be displayed on a per-team basis as shown in FIG. 13, or may be selectively displayed per-user, per task type, or on any other suitable basis.

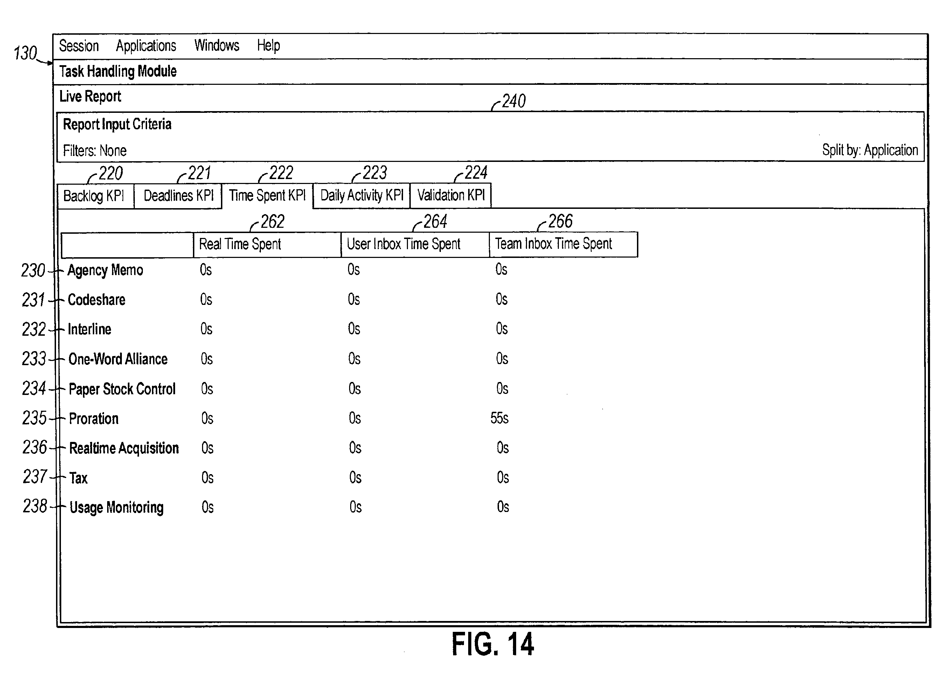

As shown in FIG. 14, the exemplary time spent KPI window 222 may display task information relating to how much time is being spent to resolve tasks. This data may include real time spent 262, user inbox time spent 264, team inbox time spent 266. The times displayed may be an average time spent per task, a median time spent per task, or a cumulative time spent per task for the group being monitored. In an alternative embodiment of the invention, the time spent KPI window 222 may also display data indicating a number of validation steps performed or a number of rejections that occurred.

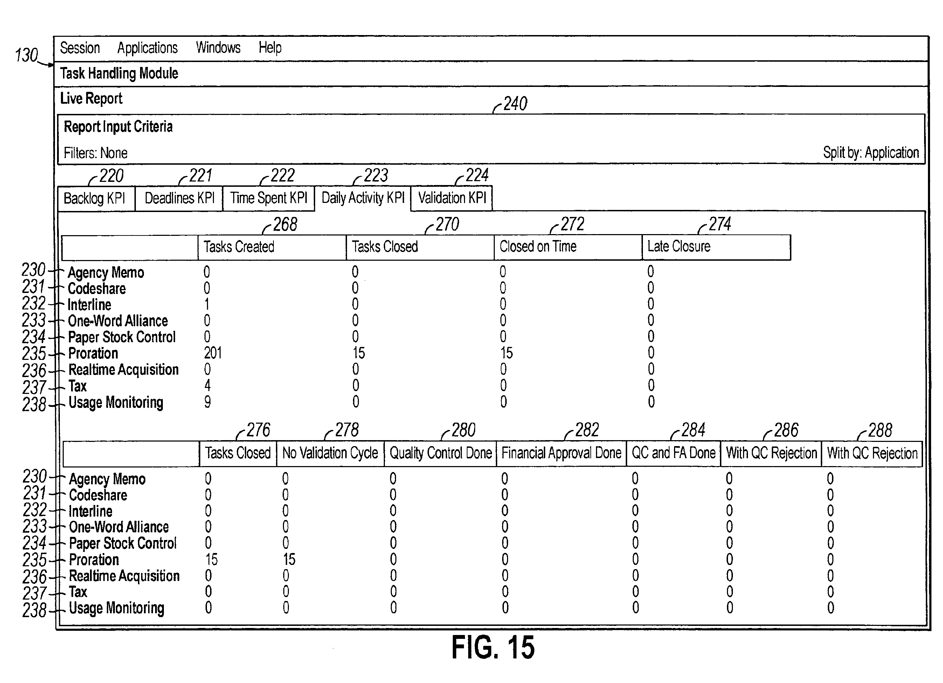

As shown in FIG. 15, the exemplary daily activity KPI window 223 may display information relating to an amount of activity that occurred during the period being monitored, such as the number tasks created and closed for the period. This data may include the number of tasks created 268, tasks closed 270, tasks closed on time 272, tasks closed late 274, total tasks closed 276, tasks not subjected to a validation cycle 278, tasks subjected to a quality control review 280, tasks subjected to a financial approval 282, tasks subjected to both quality control review and financial approval 284, tasks that were rejected for failing quality control review 286, and tasks that were rejected for failing to receive financial approval 288.

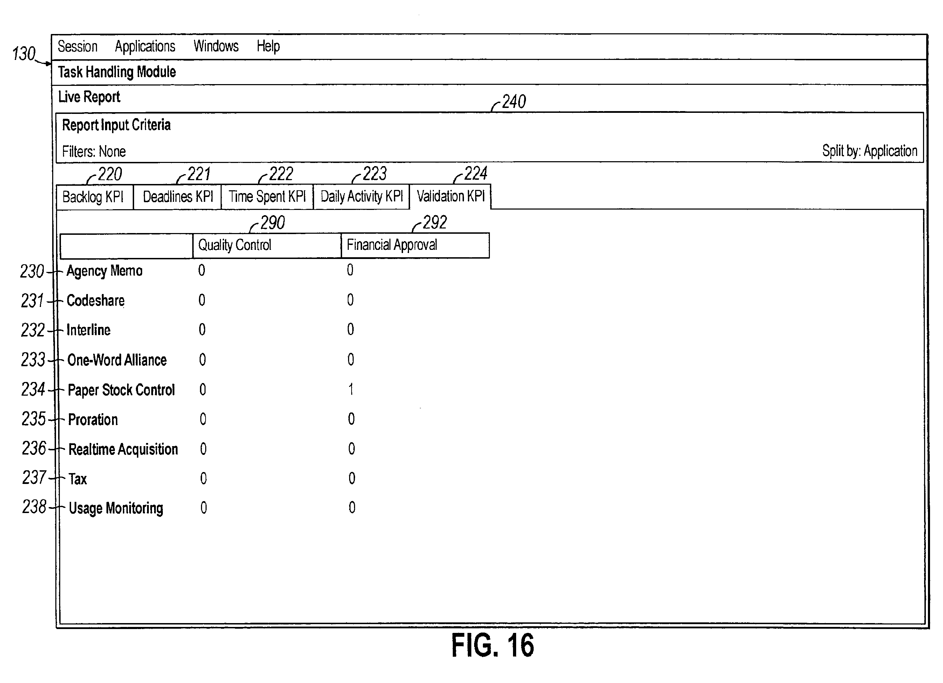

As shown in FIG. 16, the exemplary validation KPI window 224 may display information relating to the number of tasks being validated. This data may include the number of tasks that were subjected to quality control 290, and/or financial approval 292.

The KPIs provided by the user interface 130 of task handling module 52 may facilitate adjusting the makeup of teams in response to, for example, an increase or decrease of the number of tasks in backlog. The KPIs may also help users determine when to launch corrective actions. For example, in response to the number of rejections exceeding a threshold, carriers may provide increased training or coaching for operators. The data provided may also facilitate adjusting the trigger levels for performing validations if the number of rejections is lower than expected. The historical data relating to the amount of time spent on tasks may also enable carriers to determine the effects of actions on efficiency.

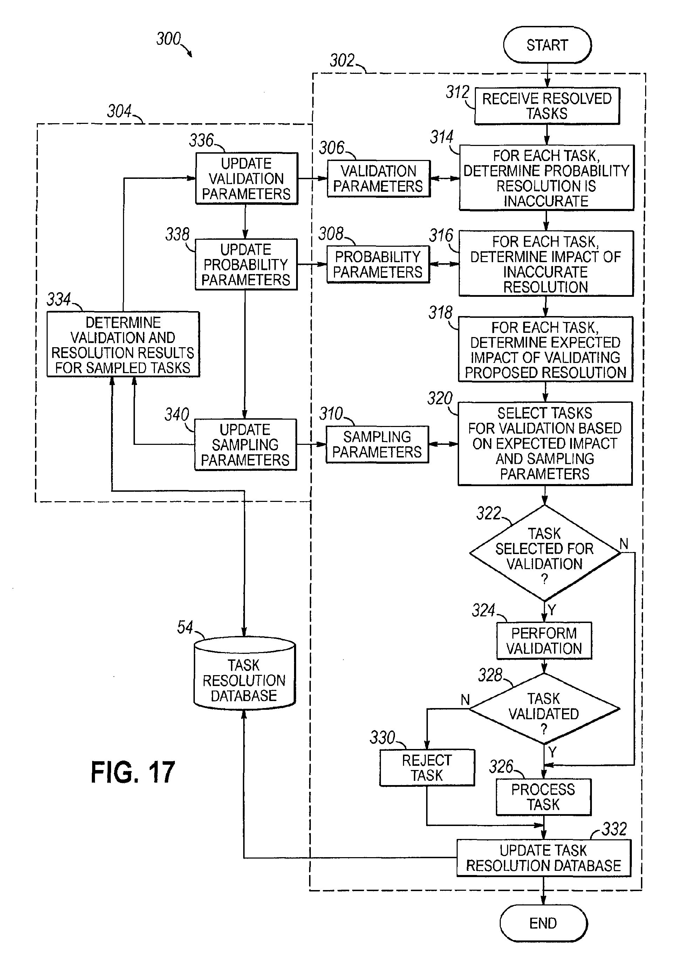

FIG. 17 depicts a validation optimization process 300 that may be implemented by the task handling module 52. The process 300 may dynamically optimize validation decisions based on the results of validations and/or resolved tasks stored in the task resolution database 54. To this end, the validation optimization process 300 may include a validation sub-process 302, and a sampling sub-process 304. The validation sub-process 302 may determine which resolved tasks to validate from a plurality of resolved tasks. The sampling sub-process 304 may dynamically determine a set of validation parameters 306, a set of probability parameters 308, and a set of sampling parameters 310 based on historical data in the task resolution database 54. These sets of parameters may then be used by the validation sub-process 302 to select resolved tasks for validation.

In block 312, the validation sub-process 302 may receive a plurality of resolved tasks. The resolved tasks may comprise, for example, resolved tasks submitted for review or implementation by operators of a virtual team. These submissions may occur over a specific period of time, such as a day or an operator shift, and/or may be placed in a queue as the resolved tasks are submitted. In response to receiving the resolved tasks, the validation sub-process 302 may proceed to block 314.

In block 314, the validation sub-process 302 may determine, for each resolved task, a probability *P_{I}* that the proposed resolution of the resolved task is inaccurate. This determination may be based on the validation parameters 306, which may include statistical parameters, such as weighted functions determined by the sampling sub-process 304. The validation parameters 306 may generate the probability *P_{I}* based on input, such as characteristics of the task or the underlying transaction. Exemplary characteristics may include, but are not limited to, the type of task, one or more characteristics of the transaction giving rise to the task, or any other suitable characteristic of the task. Because the validation parameters may be dynamically updated as historical data is added to the task resolution database 54, the probability *P_{I}* that the proposed resolution is accurate may be determined based on the most recent data available. The validation sub-process 302 may then proceed to block 316.

In block 316, the validation sub-process 302 may determine an amount *A* representing an expected financial impact, or cost, to the carrier if the proposed resolution is inaccurate and allowed to issue. This determination may be based on the probability parameters 308, which may include statistical parameters, such as probabilities that the amounts in any documents associated with the resolution (e.g., an ADM) are accurate. By way of example, for a resolved task raising an ADM, the amount *A* may be based on a product of a probability *P_{D}* that the ADM will be disputed times an estimated cost for responding to the dispute. Methods, systems, and computer program products for determining costs associated with issuing an ADM or inquiry are described in more detail in U.S. Patent Application Ser. No. 13/926,136, filed June 25, 2013 and entitled "OPTIMIZING GENERATION OF AGENCY DEBIT MEMOS", Attorney Docket No. AMS-143US, the disclosure of which is incorporated herein by reference in its entirety for all purposes.

Once the probability *P_{I}* and the expected financial impact amount *A* have been determined, the validation sub-process 302 may proceed to block 318. In block 318, the validation sub-process 302 may determine an expected impact *V_{E}* of validating each proposed resolution based on the product of the probability *P_{I}* and the expected financial impact amount *A*. The validation sub-process 302 may then proceed to block 320 and select a portion of the resolved tasks for validation. This portion may include resolved tasks that are selected broadly, and resolved tasks that are selected based on their expected impact *V_{E}.* This split may be made to take into consideration a capacity of the team of validators to validate resolved tasks. By way of example, the team of validators may comprise one or more validators belonging to a team of users that includes a plurality of operators who resolve tasks. The team of validators may have a capacity to validate a certain amount of resolved tasks that is less than the capacity of the operators to resolved tasks. Due to this limit on validation capacity, it may be desirable to only validate a portion of the resolved tasks.

In block 320, the validation sub-process 302 may select the portion of the resolved tasks for validation. The portion selected for validation may comprise one portion that is selected broadly (e.g., at random, or to provide a sampling of resolved tasks that would otherwise not be validated), and another portion that is selected based on the expected impact *V_{E}* of the resolved tasks. The ratio of resolved tasks selected broadly to resolved tasks selected based on their expected impact *V_{E}* may be determined based on the sampling parameters 310. By including samples selected broadly and samples selected based on the expected impact *V_{E},* the resolved tasks selected for validation may optimize a cumulative impact of validation (e.g., the sum of *V_{E}* for each resolved tasks validated), while obtaining historical data on resolved tasks that would otherwise not be validated.

In block 322, the validation sub-process 302 may, for each resolved task in the plurality of resolved tasks, determine if the resolved task has been selected for validation. If the resolved task has been selected for validation ("YES" branch of decision block 322), the validation sub-process 302 may proceed to block 324 and cause the validation to be performed. The validation sub-process 302 may cause the validation to be performed by, for example, dispatching the resolved task to the team inbox of the validation team or the user inbox of one of the validators. If the validation sub-process 302 determines that the resolved task has not been selected for validation ("NO" branch of decision block 322), the validation sub-process 302 may proceed to block 326 and allow the resolved task to be processed without validation. That is, the validation sub-process 302 may allow implementation of the proposed resolution by issuing memos or other documents defined by the resolved task.

In response to the validation being performed in block 324, the validation sub-process may proceed to block 328 and determine if the resolved task was validated. In response to the resolved task being validated ("YES" branch of decision block 328), the validation sub-process 302 may proceed to block 326 and cause the proposed resolution to be implemented as described above. In response to the resolved task not being validated ("NO" branch of decision block 328), the validation sub-process 302 may proceed to block 330 and reject the proposed resolution. Rejecting the proposed resolution may comprise dispatching the task back to the user inbox of the operator that originally resolved the task. Rejecting the resolution may also comprise dispatching the task to another user inbox, such as the user inbox of a non-originating operator, another validator, a supervisor, or any other user that may resolve the task. The validation sub-process 302 may then proceed to block 332 and update the task resolution database 54 with the results of the validations.

The sampling sub-process 304 may retrieve and process historical validation and/or task resolution data in the task resolution database 54 to optimize values for the validation parameters 306, probability parameters 308, and sampling parameters 310 used by the validation sub-process 302. To this end, in block 334, the validation sub-process 302 may determine validation and resolution results using current or starting values for the validation parameters 306, probability parameters 308, and sampling parameters 310 based on historical data obtained from the task resolution database 54.

In an embodiment of the invention, the sampling sub-process 304 may determine an actual impact *V_{A}* for a plurality validation parameters having different values based on the historical data in the task resolution database 54. The sampling sub-process 304 may then select the values for the validation parameters 306 that provide the most desirable or optimal cumulative impact, e.g., the sum of values of *V_{A}* determined using actual outcomes stored in the task resolution database 54 that provide the most positive (or least negative) financial impact to the carrier. This process may be repeated for the set of probability parameters 308 and set of sampling parameters 310. The updating process may be iterative, and may be repeated until the optimal values for each set of parameters are determined. The updated sets of parameters may be the combination of validation parameters 306, probability parameters 308, and sampling parameters 310 that have been determined to optimize a total financial impact of the validation optimization process 300.

Once the parameters have been determined, the sampling sub-process 304 may proceed to blocks 336, 338, and 340 and update the validation parameters 306, probability parameters 308, and sampling parameters 310, respectively. The validation sub-process 302 may thereby dynamically update the validation parameters 306, probability parameters 308, and sampling parameters 310 so that these parameters reflect the most recent data available.

As described above, the sampling parameters 310 may be used to determine a fraction of the validation capacity that is to be used to validate broadly selected resolved tasks. The remaining capacity may then be used to evaluate resolved tasks based on the expected impact, with the probability that a proposed resolution is selected for validation being proportional to the expected impact *V_{E}* of the validation. That is, the updated sampling parameters 310 may be the sampling parameters 310 that have been determined to optimize a total financial impact of the validation optimization process 300. This optimization may take into account an expected benefit from validating the broadly selected tasks due to increased accuracy of the probability *P_{I}* and the expected financial impact amount *A* resulting from the additional data provided by the broad sampling.

To determine the sampling parameters 310, the sampling sub-process 304 may determine a financial impact for a plurality of ratios of broad sampling to in-depth sampling using historical task data in the task resolution database 54. The sampling sub-process 304 may then select the ratio that provides the best outcome. The broad sampling may examine results of previous validations based on limited set of criteria, such as task type or business unit. The broad sampling may be configured so that the historical data in the task resolution database covers a broad spectrum of tasks. The in-depth sampling may examine results based on more task specific data, such as the expected impact *V_{E},* the user that performed or validated the task, ticket parameters such as origination-destination pair, ticket fare, or any other suitable data. In any case, a ratio of broad sampling to in-depth sampling used by the validation sub-process 302 may be determined based on sampling parameters 310. For example, the sampling parameters 310 may indicate that x% of sampling capacity should be devoted to broad sampling, and (100-x)% of the sampling capacity should be devoted to in-depth sampling.

In general, the routines executed to implement the embodiments of the invention, whether implemented as part of an operating system or a specific application, component, program, object, module or sequence of instructions, or even a subset thereof, may be referred to herein as "computer program code," or simply "program code." Program code typically comprises computer-readable instructions that are resident at various times in various memory and storage devices in a computer and that, when read and executed by one or more processors in a computer, cause that computer to perform the operations necessary to execute operations or elements embodying the various aspects of the embodiments of the invention. Computer-readable program instructions for carrying out operations of the embodiments of the invention may be, for example, assembly language, source code, and/or object code written in any combination of one or more programming languages.

Various program code described herein may be identified based upon the application within which the program code is implemented in specific embodiments of the invention. However, it should be appreciated that any particular program nomenclature that follows is used merely for convenience, and thus the invention should not be limited to use solely in any specific application identified or implied by such nomenclature. Furthermore, given the generally endless number of manners in which computer programs may be organized into routines, procedures, methods, modules, objects, and the like, as well as the various manners in which program functionality may be allocated among various software layers that are resident within a typical computer (e.g., operating systems, libraries, API's, applications, applets, etc.), it should be appreciated that the embodiments of the invention are not limited to the specific organization and allocation of program functionality described herein.

The program code embodied in any of the applications and/or modules described herein is capable of being individually or collectively distributed as a program product in a variety of different forms. In particular, the program code may be distributed using a computer-readable storage medium having computer-readable program instructions thereon for causing a processor to carry out aspects of the embodiments of the invention.

Computer-readable storage media, which is inherently non-transitory, may include volatile and non-volatile, and removable and non-removable tangible media implemented in any method or technology for storage of information, such as computer-readable instructions, data structures, program modules, or other data. Computer-readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. A computer-readable storage medium should not be construed as transitory signals per se (e.g., radio waves or other propagating electromagnetic waves, electromagnetic waves propagating through a transmission media such as a waveguide, or electrical signals transmitted through a wire). Computer-readable program instructions may be downloaded to a computer, another type of programmable data processing apparatus, another device from a computer-readable storage medium, or to an external computer or external storage device via a network.

Computer-readable program instructions stored in a computer-readable medium may be used to direct a computer, other types of programmable data processing apparatus, or other devices to function in a particular manner, such that the instructions stored in the computer-readable medium produce an article of manufacture including instructions that implement the functions, acts, or operations specified in the flowcharts, sequence diagrams, or block diagrams. The computer program instructions may be provided to one or more processors of a general purpose computer, a special purpose computer, or other programmable data processing apparatus to produce a machine, such that the instructions, which execute via the one or more processors, cause a series of computations to be performed to implement the functions, acts, or operations specified in the flowcharts, sequence diagrams, or block diagrams.

In certain alternative embodiments, the functions, acts, or operations specified in the flowcharts, sequence diagrams, or block diagrams may be re-ordered, processed serially, or processed concurrently consistent with embodiments of the invention. Moreover, any of the flowcharts, sequence diagrams, or block diagrams may include more or fewer blocks than those illustrated consistent with embodiments of the invention.

The terminology used herein is for the purpose of describing particular embodiments only and is not intended to be limiting of the embodiments of the invention. As used herein, the singular forms "a", "an" and "the" are intended to include the plural forms as well, unless the context clearly indicates otherwise. It will be further understood that the terms "comprises" or "comprising," when used in this specification, specify the presence of stated features, integers, steps, operations, elements, or components, but do not preclude the presence or addition of one or more other features, integers, steps, operations, elements, components, or groups thereof. Furthermore, to the extent that the terms "includes", "having", "has", "with", "comprised of', or variants thereof are used in either the detailed description or the claims, such terms are intended to be inclusive in a manner similar to the term "comprising".

While all of the invention has been illustrated by a description of various embodiments and while these embodiments have been described in considerable detail, it is not the intention of the Applicant to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the Applicant's general inventive concept.

## Claims

1. A method of managing a plurality of tasks using a plurality of team inboxes, each team inbox having a team profile, the method comprising:
for each task of the plurality of tasks:
determining, by a computer, a type of the task;
determining, by the computer, one or more team inboxes having the team profile that matches the type of the task; and
adding, by the computer, the task to one of the one or more team inboxes having the matching team profile; and
for each user of a first plurality of users:
authorizing, by the computer, access to one or more of the plurality of team inboxes; and
denying, by the computer, access to each team inbox the user has not been authorized to access,
wherein each team inbox defines a virtual team of users having access to tasks in the team inbox.

2. The method of claim 1 further comprising:
for each user of a second plurality of users having access to a first team inbox of the plurality of team inboxes:
defining a user profile including at least one characteristic of the user;
associating a user inbox with the user profile; and
authorizing the user to access to the user inbox; and
for at least one task in the first team inbox:
determining the user profile that matches the type of the task; and
moving the task from the first team inbox to the user inbox associated with the matching user profile.

3. The method of claim 2 wherein the user inbox associated with the matching user profile is a first user inbox associated with a first user profile of an operator, and further comprising:
defining a second user profile of a supervisor;
associating a second user inbox with the second user profile; and
dispatching the task from the first user inbox to the second user inbox.

4. The method of claim 2 or claim 3 further comprising, for each task in the user inbox:
storing a key performance indicator in a database, the key performance indicator relating to the task; and
associating the key performance indicator with the user authorized to access the user inbox, the type of the task, or an application used to resolve the task.

5. The method of any of claims 2 to 4 wherein the second plurality of users includes one or more users of a first user type and one or more users of a second user type, and further comprising:
determining a first hierarchical level of the first user type;
determining a second hierarchical level of the second user type; and
in response to the first hierarchical level being higher than the second hierarchical level:
configuring a monitoring inbox with access to each user inbox of each user of the second user type; and
authorizing the one or more users of the first user type to access the monitoring inbox.

6. The method of claim 5 wherein the one or more users of the first user type having access to the monitoring inbox are further authorized to recall tasks in the monitoring inbox.

7. The method of any of claims 2 to 6 wherein the first team inbox includes a first task and a second task, and further comprising:
determining a relative urgency of the first task and the second task; and
in response to a request to assign one of the first task and the second task from the first team inbox to the user inbox of one of the second plurality of users, assigning the one of the first task and the second task having a higher relative urgency.

8. The method of claim 7 wherein the relative urgency of the first task and the second task is determined based at least in part on a relative severity of the first task to the second task, a relative due date of the first task to the second task, or a relative similarity of the first task and the second task to a previous task assigned to the user inbox of the one of the second plurality of users.

9. The method of any of claims 1 to 6 further comprising:
determining a root cause of a first accounting issue that triggered generation of a first task of the plurality of tasks;
determining if the root cause creates a second accounting issue that triggers generation of a second task; and
in response to the root cause creating the second accounting issue, consolidating the second accounting issue into the first task and suppressing generation of the second task.

10. The method of any of claims 1 to 9 further comprising:
for each of a plurality of resolved tasks:
determining a probability that a proposed resolution of the resolved task is inaccurate;
determining an expected financial impact of implementing the resolved task if the proposed resolution is inaccurate; and
determining an expected impact of validating the resolved task based on the probability and the expected financial impact; and
selecting a portion of the plurality of resolved tasks for validation based at least in part on the expected impact of validating each resolved task, and a capacity of a team of validators to validate the resolved tasks.

11. The method of any of claims 1 to 10 wherein each task of the plurality of tasks is associated with a task template, and further comprising, for each task of the plurality of tasks:
determining a validation trigger for the task based on the task template;
in response to the task being solved, determining if the validation trigger is triggered; and
in response to the validation trigger being triggered, dispatching the task to one of the one or more team inboxes associated with a validation cycle.

12. The method of any of claims 1 to 10 wherein each task of the plurality of tasks is associated with a task template, and further comprising, for each task of the plurality of tasks:
extracting business data from the task template;
determining a value of a task parameter identified by the business data;
comparing the value to the team profile of the one or more team inboxes; and
matching one of the one or more team inboxes to the task based on the comparison,
wherein the task is added to the one of the one or more team inboxes.

13. The method of claim 11 or claim 12 wherein each user of the first plurality of users is associated with a user profile, and further comprising, for each user of the first plurality of users:
extracting a security requirement from the task template;
determining if the user profile of the user satisfies the security requirement; and
blocking the user from accessing the task if the user profile fails to satisfy the security requirement.

14. A system for managing a plurality of tasks using a plurality of team inboxes, each team inbox having a team profile, the system comprising:
a processor; and
a memory including instructions that, when executed by the processor, cause the system to perform the method of any of claims 1 to 13.

15. A computer program product for managing a plurality of tasks using a plurality of team inboxes, the computer program product comprising:
a non-transitory computer-readable storage medium; and
instructions stored on the non-transitory computer-readable storage medium that, when executed by a processor, causes the processor to perform the method of any of claims 1 to 13.
